# FASCICULE DE BREVET EUROPEEN

(11) **EP 1 513 966 B1**
(45) Date de publication et mention de la délivrance du brevet: **05.03.2008**
(21) Numéro de dépôt: 03760730.6
(22) Date de dépôt: 16.06.2003
(51) Int. Cl.: C23C 22/56

(54) **PROCEDE DE TRAITEMENT DE SURFACE POUR TOLES ET BANDES EN ALLIAGE D ALUMINIUM**
Verfahren zur Oberflächenbehandlung von Blech oder Band aus Aluminium-Legierung
METHOD FOR SURFACE TREATMENT OF SHEETS AND STRIPS OF ALUMINIUM ALLOY

(30) Priorité: 20.06.2002 FR 0207633
(43) Date de publication de la demande: 16.03.2005
(73) Titulaire: ALCAN RHENALU, 92400 Courbevoie (FR)
(72) Inventeur: BENMALEK, Mohammed, F-38400 Saint Martin d'Heres (FR); GAVOILLE, Pierre, F-68100 Mulhouse (FR); GOLFOUSE, Antoine, F-68330 Huningue (FR); HANK, Evelyne, F-38430 Moirans (FR); SHAHANI, Ravi, F-68280 Andolsheim (FR)
(74) Mandataire: Marsolais, Richard
(86) Numéro de dépôt international: PCT/FR2003/001810
(87) Numéro de publication internationale: WO 2004/001096

(56) Documents cités:
- EP-A- 0 557 531
- US-A- 5 472 524

## Description

### Domaine de l'invention

L'invention concerne le domaine des traitements de surface des tôles et bandes en alliage d'aluminium, plus particulièrement en alliage de type 6xxx ou 5xxx selon la désignation de l'Aluminum Association, destinées notamment à la fabrication de pièces de carrosserie de voitures.

### Etat de la technique

L'aluminium est utilisé de manière croissante dans la construction automobile pour réduire le poids des véhicules et donc la consommation de carburant et les rejets de polluants et de gaz à effets de serre. Les tôles sont utilisées notamment pour la fabrication de pièces de peau de carrosserie, en particulier les ouvrants. Ce type d'application requiert un ensemble de propriétés, parfois antagonistes, telles que:
- une formabilité élevée pour les opérations d'emboutissage et de sertissage,
- une limite d'élasticité contrôlée à l'état de livraison de la tôle pour maîtriser le retour élastique,
- une résistance mécanique élevée après cuisson des peintures pour obtenir une bonne résistance à l'indentation, tout en minimisant le poids de la pièce,
- une qualité de surface adaptée aux opérations d'assemblage sur tôle sèche ou grasse,
- une bonne résistance à la corrosion, notamment la corrosion filiforme,
- une bonne qualité de surface après mise en forme et peinture,
- une compatibilité avec les exigences du recyclage des déchets de fabrication ou des véhicules en fin de vie,
- un coût acceptable pour une production en grande série.

Ces exigences ont conduit, en Europe, au choix des alliages Al-Mg-Si, c'est-à-dire les alliages de la série 6000, pour la peau, et des alliages Al-Mg de la série 5000, pour les renforts ou doublures. En matière d'état de surface, les exigences sont liées au mode d'assemblage utilisé.

Pour l'assemblage mécanique, il n'y a pas d'exigence particulière sur la qualité de surface, hormis seulement un état de propreté convenable. Pour les pièces serties collées telles que les capots, l'opération de collage s'effectue le plus souvent sur tôles grasses sans préjudice de la tenue des joints.

Les opérations de soudage nécessitent parfois, selon le type, une surface propre, c'est-à-dire dégraissée, afin de réduire les porosités et fissures dans les soudures. Ceci est cependant moins critique dans le cas du soudage laser. La réponse de la surface est alors déterminée par la valeur de la résistance de contact mesurée en Europe selon la norme DVS 2929.

Pour le collage structural dans la construction aéronautique, on recourt habituellement à un pré-traitement de surface avant collage, généralement une anodisation chromique et phosphorique. Dans d'autres domaines d'application tels que l'emballage ou le bâtiment, on emploie les conversions chimiques à base de chrome. Bien qu'encore souvent utilisées, ces conversions risquent de disparaître pour des raisons d'environnement par crainte de la présence de chrome hexavalent.

Des traitements plus récents utilisent des éléments tels que le silicium, le titane ou le zirconium en remplacement du chrome. De tels traitements sont décrits par exemple dans les brevets US 5514211 (Alcan), US 5879437 (Alcan), US 6167609 (Alcoa) et EP 0646187 (Boeing).

Pour des pièces de structure d'automobile, le besoin d'une préparation de surface adaptée aux opérations d'assemblage peut-être nécessaire. La réalisation de ces pré-traitements est consommatrice de temps et onéreuse. En effet la formation de la couche de surface nécessite tout une série de manipulations de différents bains avec un nombre de cuves qui peut être supérieur à 8. Ainsi une ligne standard de traitement est constituée de 2 bains de dégraissage alcalin, suivi de 2 bains de rinçage, d'un bain de neutralisation acide, d'un bain de traitement spécifique, suivi de 2 bains de rinçage et d'une étape de séchage. La plupart de ces bains sont chauffés parfois jusqu' à 60°C, ce qui est consommateur d'énergie.

L'invention se propose donc de réaliser un pré-traitement sur bandes ou tôles en alliages d'aluminium adapté aux exigences de la construction automobile, en réduisant au maximum les opérations de manipulation de la bande ou de la tôle. Elle a en particulier pour but de fournir des tôles prêtes à l'assemblage pour des pièces de carrosserie de voiture, avec des performances élevées pour l'adhérence des colles et adhésifs utilisés dans l'automobile et pour le soudage par points, ainsi qu'une stabilité dans le temps de la qualité de surface.

### Objet de l'invention

L'invention a pour objet un procédé de traitement de surface d'une tôle ou bande en alliage d'aluminium pour former une couche de conversion chimique, la tôle ou la bande étant issue d'une gamme de fabrication comportant un traitement thermique suivi d'un refroidissement dans un liquide, dans lequel la conversion chimique est effectuée à l'aide du liquide de refroidissement, de préférence sans autre traitement de surface antérieur ou postérieur. De préférence, le liquide de refroidissement contient entre 1 et 10% en poids d'au moins un sel de l'un au moins des métaux Si, Ti Zr, Ce, Mn, Mo ou V.

### Description de l'invention

Le procédé de fabrication dès tôles en alliage 6XXX par exemple, comporte la coulée d'une plaque, éventuellement le scalpage de cette plaque, et son homogénéisation à une température comprise entre 550 et 580°C. Le laminage à chaud se fait à une température d'entrée supérieure à 540°C. La bande laminée à chaud est ensuite laminée à froid jusqu'à l'épaisseur finale. La dernière passe de laminage à froid peut être effectuée avec un cylindre texturé, par exemple par traitement par faisceau d'électrons (EBT), par électro-érosion (EDT) ou par faisceau laser, ce qui améliore la formabilité et l'aspect de surface de la pièce formée après peinture.

La mise en solution se fait à une température aussi proche que possible de la température de fusion commençante de l'alliage, tout en évitant la brûlure. La bande passe dans un four d'homogénéisation à passage où la température est supérieure à 500°C. Le métal mis en solution est immédiatement trempé en passant dans un bac contenant de l'eau froide ou subit un arrosage avec cette eau froide.

La caractéristique de l'invention est justement d'effectuer la trempe avec un liquide qui réagit avec la surface pour former une couche d'oxyde ayant des propriétés d'adhérence et de stabilité comparables à ce que l'on obtient généralement avec les longues opérations de traitement de surface de conversion chimique. On peut ainsi supprimer totalement les opérations de pré-traitement et de post-traitement chimique utilisées habituellement en conversion chimique.

La trempe est réalisée de préférence à l'aide d'une solution contenant des éléments métalliques tels Si, Ti, Zr, Ce, Mn, Mo, V, ou des combinaisons de ces éléments, par exemple un produit Ti/Zr, pouvant réagir chimiquement avec la surface du métal pour former une couche d'oxyde plus stable que l'oxyde naturel. Il a été constaté que cette opération pouvait s'effectuer bien que la bande ne reste au contact du liquide que pendant un temps très court, compatible avec les vitesses de production.

Il est préférable d'exclure les réactifs contenant du chrome, pour éviter la formation éventuelle de produits contenant du chrome hexavalent.

L'oxyde formé combine à la fois l'aluminium et l'élément présent dans le bain. De nombreuses compositions de bains sont disponibles sur le marché, tels que celles contenant des sels de titane, de zirconium, de cérium, de cobalt, de manganèse, de vanadium ou des composés siliciés.

La mise en contact du bain avec le métal chaud pouvait faire craindre une absence de réaction, ou une décomposition des composés de la solution. Or il n'en est rien, et on constate, par analyse ESCA (Electron Spectroscopy for Chemical Analysis) ou aux rayons X, la présence dans la couche des principaux éléments déjà présents dans le bain. Ces éléments sont associés pour former une couche stable qui va servir de base d'accrochage aux adhésifs sur le métal traité. Cet oxyde formé lors de l'opération de trempe semble plus stable que celui que l'on peut obtenir en trempant le métal dans le bain à la température ambiante. Par ailleurs le température active la réaction chimique et donc réduit le temps de contact, ce qui a pour effet d'accroître la productivité. On peut penser que les premières molécules du bains qui viennent en contact avec la surface servent à vaporiser le reste des contaminants qui n'ont pas été éliminés par l'opération de mise en solution à haute température dans le four. On constate que cet entraînement permet l'élimination de particules de faible masse, qui ne peuvent être enlevées par le simple passage dans le four. Au cours de la même opération, l'alliage subit une réaction de boehmitage, et ensuite le bain réagit avec la surface pour former un nouvel oxyde, qui va croître jusqu'à une certaine épaisseur en fonction du temps de contact et du produit utilisé.

Les additifs dans le bains de trempe sont à une concentration très faible, inférieure à 10%, et de préférence entre 1 et 5%. De même, l'agressivité du bain en termes d'acidité est limitée en utilisant des bains de pH compris entre 3 et 11.

Le même type de traitement peut être effectué sur des tôles et bandes en alliages ne subissant pas de mise en solution, mais seulement un traitement thermique à température sensiblement plus basse, comme c'est le cas pour les alliages de la famille 5000, traités au voisinage de 400°C. Selon le type d'alliage, cette température peut être abaissée à 250°C, et même en deçà, sans nuire de manière sensible à la qualité du produit formé. Certes, on risque de réduire dans ce cas l'effet de dégraissage thermique, mais le dégraissage peut être obtenu par d'autres moyens. L'invention peut donc s'appliquer à tous les alliages subissant un traitement thermique suivi d'un refroidissement dans un liquide, et nécessitant un oxyde de surface contrôlé.

Les couches formées peuvent être contrôlées par rayons X ou par l'analyse ESCA, qui donnent des informations sur les constituants de la couche et, en plus, pour l'ESCA, sur les liaisons chimiques dans lesquelles les éléments sont impliqués.

L'épaisseur d'oxyde est très faible, dans le domaine 5 à 50 nm. Comme on peut le mesurer par la résistance de contact inférieure à 20 µΩ, et se situe ainsi à des valeurs compatibles avec les exigences de l'industrie automobile.

La trempe peut être suivie d'un traitement thermique, par exemple un pré-revenu destiné à améliorer les performances du durcissement lors de la cuisson des peintures. La bande est ensuite re-bobinée après planage. La tôle peut être, avant mise en forme, revêtue d'un lubrifiant, notamment un lubrifiant sec, adapté à l'emboutissage et l'assemblage, et compatible avec le traitement de surface de la pièce à réaliser.

La tôle est le plus souvent stockée à ce stade pendant un temps plus ou moins long, ce qui conduit, dans le cas des alliages à durcissement structural, à une maturation naturelle qui fait augmenter la limite d'élasticité au fil du temps pour les alliages 6xxx.

Si les conditions de stockage (température, humidité) ne sont pas contrôlées, on assiste souvent à une hydratation de l'oxyde naturel. Bien que cette réaction soit thermodynamiquement réversible, on peut parfois être amené à assembler des pièces avec un taux d'hydratation élevé, ce qui est préjudiciable aux opérations d'assemblage et à la durée de vie des pièces assemblées.

L'aptitude de la surface au collage peut être contrôlée par un test de collage, par exemple le test de clivage (dit test Boeing) selon la norme ASTM D-3762 (ou NF T76-114), bien connu pour évaluer l'aptitude au collage structural. Les éprouvettes après collage sont soumises à un vieillissement dans une atmosphère humide à une température de 50°C.

Le procédé de traitement de surface des tôles et bandes en alliage d'aluminium selon l'invention est particulièrement bien adapté au traitement des tôles de carrosserie avant assemblage, notamment par collage ou par soudage par points. Mais il peut aussi trouver son application dans d'autres domaines qui nécessitent une surface passivée de la tôle pour une grande stabilité dans le temps et une couche d'oxyde contrôlée.

### Exemples

### Exemple 1

Une tôle d'épaisseur 1,2 mm en alliage 6016 a été chauffée à une température voisine de 550°C, puis plongée dans un bain contenant 2,5% du produit fourni par la société Chemetall pour fabriquer la solution de passivation dite Gardobond 4591 ®,1 qui contient du titane et du zirconium comme éléments actifs de l'adhésion. Après la trempe, deux plaques de la tôle ont été découpées pour réaliser les éprouvettes renforcées de collage selon la procédure décrite dans la norme NF T76-114. Les plaques de 200x150 mm ont subi un contre-collage sur une face avec des plaques en alliage 2017-T4 traitées par anodisation phosphorique afin de renforcer la structure. L'adhésif utilisé pour le collage est une colle époxy mono-composant fournie par la société Dow Automotive.

Après découpe des éprouvettes de 125x12,5x1.2 mm, on introduit un coin entre les deux plaques collées, et on mesure la propagation de la fissure induite par cette opération. La longueur de fissure à cet instant T₀ est appelée I₀. L'éprouvette est ensuite placée dans une atmosphère humide du type cataplasme à 50°C. Au bout de 96h de maintien dans ces conditions de vieillissement, on sort les éprouvettes pour mesurer la nouvelle longueur de fissure lₜ. Pour chaque essai, on réalise trois éprouvettes pour donner une valeur moyenne de 1. On constate que la variation de la propagation Δl = lₜ - l₀ est de 10 mm, ce qui est très faible, indiquant une bonne tenue du joint collé. En effet pour des assemblages non performants, on peut atteindre en très peu de temps la séparation des plaques par décohésion.

Sur un échantillon de tôle, traité par trempe comme précédemment, on a mesuré la résistance de contact selon la norme DVS 2929. La valeur moyenne de 10 mesures a été de 17,3 µΩ, ce qui signifie que ce matériau traité doit avoir un excellent comportement en soudage par points.

### Exemple 2

Une tôle de 1,2 mm en alliage 6016 a été chauffée à une température voisine de 530°C puis plongé dans un bain contenant 2% du produit DYNASYLAN ® Glymo (3-glucidyl-oxy-trimethoxy-silane) fourni par la société Degussa. Après la trempe, deux plaques de la tôle ont été découpées pour réaliser les éprouvettes renforcées de collage selon le test décrit dans la norme NF T76-114. Les plaques de 200x150 mm sont contre-collées sur une face avec des plaques en alliage 2024 afin de renforcer la structure. L'adhésif utilisé pour le collage est une colle époxy mono-composant XW1044-5, fournie par la société Dow Automotive, avec une cuisson de20 mn à 180°C.

Après découpe des éprouvettes de 125x12,5x1.2 mm, on introduit un coin entre les deux plaques collées et on mesure la propagation de la fissure induite par cette opération. La longueur de fissure à cet instant T₀ est appelée l₀. L'éprouvette est ensuite placée dans une atmosphère humide du type cataplasme à 50°C. Au bout de 96h de maintien dans ces conditions de vieillissement, on sort les éprouvettes pour mesurer la nouvelle longueur de fissure lₜ. On constate que la variation de la propagation (moyenne de 3 éprouvettes) Δl = lₜ - l₀ est de 8 mm, valeur très faible indiquant une bonne tenue du joint collé. On a mesuré comme précédemment la résistance de contact selon la norme DVS 2929, la valeur moyenne de 10 mesures étant de 17,3 µΩ, ce qui signifie que ce matériau traité doit avoir un excellent comportement en soudage par points.

### Exemple 3

Les éprouvettes sont fabriquées selon le même procédé, mais en utilisant un bain contenant du produit DYNASYLAN ® Améo (amimi-propyl-ethoxy-silane) de la société Degussa. La valeur de la propagation Δl est de 13,9 mm. Cette valeur est proche des précédentes, ce qui indique là aussi un bon comportement en collage.

### Exemple 4

Les éprouvettes sont fabriquées selon le même procédé, mais en utilisant un bain contenant du produit Alodine 2040 de la société Henkel. Après collage, on constate que lors de l'opération de mise en place du coin, les plaques se séparent immédiatement indiquant un mauvais collage lié à une préparation de surface catastrophique. En effet pour ces échantillons on a observé un état de surface rugueux et non homogène. Ce produit n'est pas adapté au traitement selon l'invention.

### Exemple 5

On a fabriqué des éprouvettes à partir de plaques ayant subi un dégraissage alcalin, une désoxydation acide, une conversion classique au titane Alodine 2040 de la société Henkel avec un temps de contact de 15 s, et un séchage, avec des rinçages entre les différentes étapes.

On obtient une valeur Δl de 14,1 mm, légèrement plus élevée que les traitement selon l'invention. Cet exemple illustre le traitement en ligne classique opérant au trempé ou en aspersion. Ce traitement est long et coûteux, et nécessite un investissement important

### Exemple 6

Le traitement est identique au précédent, sauf que l'on a utilisé un traitement sans chrome à base de titane/zirconium, à l'aide du produit Gardobond 4591 ® de Chemetall. On obtient une valeur Δl de 9,1 mm, sensiblement égale à celle obtenue avec le traitement selon l'invention.

### Exemple 7

Le traitement est identique au précédent, sauf que l'on a utilisé un bain sans chrome à base de titane Henkel Alodine 2840 ®. On obtient une valeur Δl = 4,2 mm, un peu meilleure que celle obtenue avec le traitement selon l'invention. Ce procédé est cependant beaucoup plus long et onéreux sur le plan des manipulations.

### Exemple 8

Le traitement est identique à celui de l'exemple précédent, sauf que l'on a utilisé un bain sans chrome à base de titane Gardobond 4707 ® de la société Chemetall. On obtient une valeur de Δl de 8,4 mm, sensiblement égale à celle obtenue avec le traitement selon l'invention.

### Exemple 9

Lors de ce traitement, les tôles ont été dégraissées par une solvant, puis trempées dans le bain d'Alodine 2040 ® de la société Henkel. Le temps de contact est identique à celui des exemples 5, 6, 7 et 8, soit de 15 s. On obtient une valeur Δl de 65,3 mm. La valeur élevée de la propagation de la fissure indique un traitement non efficace. Ce traitement est cependant moins catastrophique que celui de l'exemple 4.

Le comportement observé peut être relié à l'absence de réaction du bain quand l'éprouvette n'a pas été dégraissée chimiquement. Dans le cas d'un traitement selon l'invention, le dégraissage est assuré par le passage en température et le fait que la réaction est activée par la température, et l'élimination des résidus se fait lors du contact de la tôle chaude avec le produit.

Les analyses ESCA effectuées sur les éprouvettes traitées selon l'invention montrent que le taux de carbone est faible, sauf pour celles correspondant au bain au silicium, et qu'il se situe au même niveau que pour les éprouvettes dégraissées chimiquement selon les conditions des lignes classiques de pré-traitement. Les épaisseurs des couches formées sont plus importantes que celle des couches formées classiquement Les composés aux silanes (exemples 2 et 3) montrent un taux de carbone plus élevé, lié au fait que ces matériaux contiennent des chaînes organiques. Les couches formées à partir du traitement mettant en jeu ces produits silanés (exemple 2 et 3) contiennent une quantité importante de silicium oxydé, ce matériau étant connu pour favoriser l'adhérence des colles, vernis et peintures.

On note que les éléments chimiques présents dans le bain se retrouvent dans la couche d'oxyde laissée par le traitement selon l'invention.. Le bain de l'exemple 1 contient du titane et du zirconium, et les couches formées à partir de ce bain en contiennent dans des proportions équivalentes. La couche formée dans les conditions de l'exemple 4 montre une teneur en titane proche de celles des produits préparés par les techniques classiques de pré-traitement, mais cette couche n'a pas donné de bons résultats au test de collage. Les analyses faites grâce à la microscopie électronique à transmission montrent des épaisseurs de couches obtenues selon la méthode de l'invention qui se situent dans le domaine de 8 à 50 nm.

Les résultats des différents exemples sont repris au tableau 1 :

**Tableau 1**

| Exemple | Référence bain | Longueur de propagation Δ1 |
|---|---|---|
| | | (mm) |
| 1 | Gardobond 4591 TL | 10 |
| 2 | S Glymo TN | 8 |
| 3 | S Améo TM | 13,9 |
| 4 | Alodine 2010 TK | Décollement immédiat |
| 5 | Alodine 2040 Ref. P | 14,1 |
| 6 | Gardobond 4591 Ref. Q | 9,1 |
| 7 | Alodine 2840 Ref. CR | 4,2 |
| 8 | Gardobond 4707 Ref. CS | 8,4 |
| 9 | Alodine 2040 Dég.T | 65,3 |

## Revendications

1. Procédé de traitement de surface d'une tôle ou bande en alliage d'aluminium pour former une couche de conversion chimique, la tôle ou la bande étant issue d'une gamme de fabrication comportant un traitement thermique suivi d'un refroidissement par un liquide, dans lequel la conversion chimique est effectuée à l'aide du liquide de refroidissement.

2. Procédé selon la revendication 1, **caractérisé en ce que** l'alliage d'aluminium est un alliage de la série 5000 ou de la série 6000.

3. Procédé selon l'une des revendications 1 ou 2, **caractérisé en ce que** la couche de conversion a une épaisseur comprise entre 5 et 50 nm.

4. Procédé selon l'une des revendications 1 à 3, **caractérisé en ce que** le liquide de refroidissement contient entre 1 et 10% en poids d'au moins un sel de l'un au moins des métaux Si, Ti, Zr, Ce, Mn, Mo ou V.

5. Procédé selon l'une des revendications 1 à 4, **caractérisé en ce que** le liquide de refroidissement a un pH compris entre 3 et 11.

6. Procédé selon l'une des revendications 1 à 5, **caractérisé en ce que** la conversion chimique dans le liquide de refroidissement ne comporte aucun traitement de surface antérieur ou postérieur.

## Claims

1. Surface treatment process for an aluminium alloy sheet or strip to form a chemical conversion coating, the sheet or strip being derived from a manufacturing procedure comprising a heat treatment followed by cooling in a liquid, in which chemical conversion is done using the cooling liquid.

2. Process according to claim 1, **characterised in that** the aluminium alloy is in the 5000 series or 6000 series.

3. Process according to one of claims 1 or 2, **characterised in that** the conversion coating thickness is between 5 and 50 nm.

4. Process according to one of claims 1 to 3, **characterised in that** the cooling liquid contains between 1 and 10% by weight of at least one salt of at least one of the metals Si, Ti, Zr, Ce, Mn, Mo or V.

5. Process according to one of claims 1 to 4, **characterised in that** the cooling liquid has a pH between 3 and 11.

6. Process according to one of claims 1 to 5, **characterised in that** the chemical conversion done using the cooling liquid does not require any prior or post surface treatment.

## Patentansprüche

1. Verfahren zur Oberflächenbehandlung eines Bleches oder Bandes aus Aluminiumlegierung zur Bildung einer chemischen Umwandlungsschicht, wobei das Blech oder Band aus einem Fabrikationsprogramm hervorgeht, das eine Wärmebehandlung gefolgt von einer Kühlung mit einer Flüssigkeit umfasst, bei dem die chemische Umwandlung mit Hilfe der Kühlflüssigkeit durchgeführt wird.

2. Verfahren nach Anspruch 1, **dadurch gekennzeichnet, dass** die Aluminiumlegierung eine Legierung der Serie 5000 oder der Serie 6000 ist.

3. Verfahren nach einem der Ansprüche 1 oder 2, **dadurch gekennzeichnet, dass** die Umwandlungsschicht eine Dicke zwischen 5 und 50 Nm hat.

4. Verfahren nach einem der Ansprüche 1 bis 3, **dadurch gekennzeichnet, dass** die Kühlflüssigkeit zwischen 1 und 10 Gew.-% mindestens eines Salzes mindestens eines der Metalle Si, Ti, Zr, Ce, Mn, Mo oder V enthält.

5. Verfahren nach einem der Ansprüche 1 bis 4, **dadurch gekennzeichnet, dass** die Kühlflüssigkeit einen pH-Wert zwischen 3 und 11 hat.

6. Verfahren nach einem der Ansprüche 1 bis 5, **dadurch gekennzeichnet, dass** die chemische Umwandlung in der Kühlflüssigkeit keine vorherige oder nachherige Oberflächenbehandlung umfasst.
